Europäisches Patentamt

European Patent Office

Office européen des brevets

(19)

(11) Veröffentlichungsnummer: **0 268 669 B1**

(12) **EUROPÄISCHE PATENTSCHRIFT**

(45) Veröffentlichungstag der Patentschrift: **19.12.90**

(21) Anmeldenummer: **87904245.5**

(22) Anmeldetag: **04.06.87**

(86) Internationale Anmeldenummer:
**PCT/EP87/00291**

(87) Internationale Veröffentlichungsnummer:
**WO 87/07679 17.12.87 Gazette 87/28**

(51) Int. Cl.⁵: **F 02 B 47/02,** F 02 D 19/12,
F 02 M 25/02

(54) **VERFAHREN UND ANORDNUNG ZUM VERBRENNEN EINES FLÜSSIGEN ODER GASFÖRMIGEN BRENNSTOFFES IN EINEM VERBRENNUNGSRAUM EINER BRENNKRAFTMASCHINE.**

(30) Priorität: **04.06.86 DE 3618700**

(43) Veröffentlichungstag der Anmeldung:
**01.06.88 Patentblatt 88/22**

(45) Bekanntmachung des Hinweises auf die
Patenterteilung:
**19.12.90 Patentblatt 90/51**

(84) Benannte Vertragsstaaten:
**AT BE CH DE FR GB IT LI NL SE**

(56) Entgegenhaltungen:
**EP-A-0 079 736
WO-A-86/03556
DE-A-2 404 829
DE-A-2 550 722
DE-A-3 133 939
FR-A- 759 822
FR-A- 883 995
GB-A-2 006 873
GB-A-2 093 121
NL-A-7 317 549
US-A-2 101 554
US-A-4 448 153**

(73) Patentinhaber: **MURABITO, Luigi
Viale Dallai 2
I-4102 Carpi (IT)**

(72) Erfinder: **RISITANO, Antonino
V.le Andrea Doria 6
I-95125 Catania (IT)**
Erfinder: **ROSARIO, Lanzafame
Via Vaccarini, 11
I-95030 S. Agata Li Battiati (IT)**
Erfinder: **POPP, Eugen
Wildenwarterstr. 20
D-8000 München 82 (DE)**

(74) Vertreter: **Popp, Eugen, Dr. et al
MEISSNER, BOLTE & PARTNER
Widenmayerstrasse 48 Postfach 86 06 24
D-8000 München 86 (DE)**

Courier Press, Leamington Spa, England.

**Beschreibung**

Die Erfindung betrifft ein Verfahren und eine Brennkraftmaschine zum Verbrennen eines flüssigen oder gasförmigen Brennstoffes in Anwesenheit von Luft oder einem anderen Oxidationsmittel und unter Verwendung von Wasser in einem Verbrennungsraum der Brennkraftmaschine, insbesondere eines Hub- oder Drehkolbenmotors, gemäß dem Oberbegriff des Anspruches 1 bzw. 11.

Herkömmliche Brennkraftmaschinen, insbesondere Hubkolbenmotoren mit Fremdzündung, wie sie in Kraftfahrzeugen und stationären Anlagen Verwendung finden, haben einen maximalen thermischen Wirkungsgrad von etwa 30%; das Verhältnis des Energiewertes des Kraftstoffes, der dem Verbrennungsraum zugeführt wird, verglichen mit der Energie, die letztlich verfügbar ist, beträgt also etwa nur 30%. Einen ähnlich geringen Wirkungsgrad weisen auch Turbinen, Kreiskolbenmaschinen oder dergleichen auf.

Es ist allgemein bekannt, den Wirkungsgrad von Brennkraftmaschinen der genannten Art durch Einleitung von Wasser oder anderem Nichtkraftstoffmaterial in den Verbrennungsraum zu erhöhen, wobei drei Arten von Wasserzugabe als vorteilhaft angesehen werden, nämlich:

1) unmittelbare Einspritzung von Wasser in den Verbrennungsraum (z.B. DE-A 34 32 787, DE-A 31 33 939 oder US-A 4,408,573);

2) Einleitung von Wasser, Wasserdampf oder Luft mit hohem Feuchtigkeitsgehalt in den dem Verbrennungsraum vorgeordneten Ansaugkanal (z.B. US-A 4,479,907, US-A 4,406,255, US-A 4,448,153, GB-A 2,093,121, GB-A 2,006,873 oder DE-A 26 02 287); und

3) Ausbildung einer Brennstoff-Wasser-Emulsion und Einleitung derselben in den Verbrennungsraum (z.B. DE-A 32 36 233 oder US-A 4,412,512).

Alle diese bekannten Systeme arbeiten in Abhängigkeit von einem oder mehreren Betriebsparametern, meist in Abhängigkeit von der Drehzahl der Brennkraftmaschine (z.B. US-A 4,191,134), dem im Ansaugkanal herrschenden Unterdruck (z.B. US-A 4,406,255), dem Abgasdruck (z.B. US-A 4,191,134) und/oder der im Ansaugkanal herrschenden Temperatur (EP-A 0 009 779). Alle diese Systeme haben eine mehr oder weniger hohe Wirkungsgrad-Verbesserung bei gleichzeitiger Reduzierung der Emission umweltbelastender Abgase, vor allem Reduzierung von CO und $NO_x$, zur Folge. Die Wirkungsgradverbesserung der bekannten Konstruktionen dürfte bei etwa 10 bis 15% liegen, was durchaus beachtlich ist.

Auch läßt sich der Brennstoff-Verbrauch um bis zu 50% reduzieren (US-A 4,479,907).

In der unter Ziff. 1) bereits zitierten DE-A 31 33 939 ist darüber hinaus vorgeschlagen, das Wasser in den Verbrennungsraum derart dosiert einzuspritzen, daß die maximale und mittlere Temperatur der Verbrennung auf einem gewählten Niveau unterhalb der unkontrollierten bzw. kritischen "Klopf"-Temperatur gehalten wird. Die Einspritzung des Wassers erfolgt dann, wenn die Brennstoff/Luft-Mischung gezündet worden ist, jedoch bevor die Verbrennung beendet ist und bevor die Temperatur und Drücke innerhalb der Verbrennungskammern ein Klopfen bewirken. Dadurch soll bei höherem Kompressionsverhältnis in der Größenordnung bis zu 18,7: 1 ein Klopfen sicher vermieden werden.

Ausgehend von dem genannten, sehr vielfältigen Stand der Technik liegt der Erfindung die Aufgabe zugrunde, ein Verfahren und eine Brennkraftmaschine der eingangs genannten Art zu schaffen, das bei noch weiter erhöhtem Wirkungsgrad und einer Brennstoff-Ersparnis bis zu etwa 60 bis 65% und erheblicher Schadstoffreduzierung eine äußerst weiche Verbrennung selbst bei niedrigsten Drehzahlen der Brennkraftmaschine erlaubt, und zwar insbesondere unter Verwendung von Niedrigoktan-Brennstoff wie Normalbenzin, oder Brennstoff mit der Oktanzahl "0", wie Acetylen oder dergleichen.

Diese Aufgabe wird verfahrensgemäß durch die kennzeichnenden Maßnahmen nach Patentanspruch 1, und vorrichtungsgemäß durch die kennzeichnenden Merkmale nach Patentanspruch 11 gelöst.

Der Kern der vorliegenden Erfindung liegt in der Zubereitung und Einleitung des Brennstoff/Luft-Gemisches in einen Verbrennungsraum unter Verdichtung und Zündung desselben sowie Einleitung von Wasser unmittelbar in den Verbrennungsraum derart, daß eine Verbrennung des Brennstoff/Luft-Gemisches bei einer Temperatur knapp unterhalb der unkontrollierten bzw. kritischen Klopf-Temperatur $T_c$ (Klopfgrenze) entsteht, die eine entsprechend fortschreitende Verdampfung des beigemengten Wassers auslöst. Der Verbrennungs- und Verdampfungszyklus erfolgt an jeder Stelle der Verbrennung, d.h. an jeder Stelle der Flammenfront im Gegensatz zu der Lösung nach der DE-A 31 33 939. Im Gegensatz zu dem aus dieser Druckschrift bekannten System wird erfindungsgemäß eine Verbrennung nahe der unkontrollierten bzw. kritischen Temperatur im Verbrennungsraum angestrebt und angesteuert durch entsprechende Beimengung von Wasser. Bisher hat die Fachwelt angestrebt, die Verbrennung in einem möglichst großen Temperaturabstand von der kritischen Temperatur im Verbrennungsraum durchzuführen, um auf diese Weise sicher ein Klopfen der Brennkraftmaschine zu vermeiden. Aus diesem Grunde verwendet man bei hoch-verdichtenden Kraftfahrzeug-Verbrennungsmotoren auch hoch-oktanhaltige Brennstoffe, obwohl diese nur in kritischen Lastbereichen erforderlich sind, im übrigen die Motoren auch mit Normalbenzin gefahren werden könnten. Durch die Verwendung von hoch-oktanhaltigem Brennstoff (Superbenzin) erreicht man jedoch eine ausreichende Sicherheit gegen Klopfen bei nahezu jedem Betriebszustand. Erfindungsgemäß soll die Verbrennung jedoch bei sämtlichen Betriebszuständen jeweils knapp unterhalb der Klopfgrenze stattfinden, wobei die Spitzentemperatur im Verbrennungsraum durch gesteuerte Wasserbeimengung bei jedem Betriebszustand knapp unterhalb der unkontrollierten bzw. kritischen Temperatur gehalten wird. Es wird also eine Temperatur im Verbrennungsraum angesteuert, die etwa 1 bis 5% unterhalb der kritischen Temperatur liegt. Diese ist abhängig vom verwendeten Brennstoff, ebenso wie das kritische Verdichtungsverhältnis oder der kritische Druck. Es hat sich gezeigt, daß die Brennkraftmaschine bei Anwendung des erfindungsgemäßen Systems (Verfahren und Brennkraftmaschine) bei jedem Betriebszustand knapp unterhalb der Klopfgrenze gefahren werden kann, wobei "reale" Verdichtungsverhältnisse, bestimmt durch das nur vom Brennstoff und Oxidationsmittel eingenommene Volumen, $\rho$ (Brennstoff/Luft) von bis zu 25:1 erhalten werden.

Überraschenderweise lassen sich nach dem erfindungsgemäßen Verfahren und unter Anwendung der erfindungsgemäßen Anordnung hochexplosive Gase wie Acetylen problemlos in einer Brennkraftmaschine mit quasi-geschlossenem Verbrennungsraum verbrennen, wie weiter unten anhand eines noch näher zu erläuternden Ausführungsbeispieles mit einem 1200-cm³-Austin-Motor für Kraftfahrzeuge dargelegt werden wird.

Unter Anwendung des erfindungsgemäßen Verfahrens bzw. der erfindungsgemäßen Anordnung läßt sich der Wirkungsgrad um bis zu 70% gegenüber herkömmlichen Brennkraftmaschinen der genannten Art verbessern. Der Kraftstoffverbrauch kann um bis zu 65% reduziert werden. Auch ist die Emission von CO und $NO_x$ auf ein Minimum reduziert. Die Brennkraftmaschine eignet sich vor allem auch zur Verbrennung von bleifreiem Benzin. Es sei jedoch an dieser Stelle nochmals betont, daß die genannten Werte sich nur dann erreichen lassen, wenn die Verbrennung knapp unterhalb der Detonationstemperatur stattfindet. Der dadurch an jedem Verbrennungsort ausgelöste Verdampfungszyklus setzt den Verbrennungszyklus fort derart, daß insgesamt eine fortschreitende "weiche" Verbrennung erhalten wird. Der Verdampfungszyklus dämpft gewissermaßen die knapp unterhalb der Klopfgrenze stattfindende Verbrennung.

Zur Erzielung der erfindungsgemäß angestrebten "2-phasigen" Verbrennung ist es von Wichtigkeit, daß der Brennstoff, Luft oder ein anderes Oxidationsmittel und Wasser im Verbrennungsraum maximal homogenisiert werden. Dann ist sichergestellt, daß an jedem Ort der Verbrennung diese in der angegebenen Weise stattfindet. Zu diesem Zweck wird das Wasser fein zerstäubt mit breiter Streuung in den Verbrennungsraum unter entsprechend hohem Druck eingespritzt, wobei die eingespritzte Menge in Abhängigkeit von der Verbrennungstemperatur gesteuert wird.

Insbesondere erfolgt die Wasserzufuhr abhängig von der im Verbrennungsraum herrschenden Temperatur derart, daß sie bei einer Temperatur von etwa 1 bis 5% unterhalb der kritischen Temperatur $T_c$ einsetzt. Es wird angestrebt, daß die Verbrennung in allen Betriebszuständen jeweils knapp unterhalb der kritischen Temperatur stattfindet, und zwar möglichst etwa 1 bis 2% unterhalb der kritischen Temperatur. Entsprechend wird die Wassereinspritzung dosiert.

Zusätzlich kann eine durch Unterdruck im Ansaugkanal gesteuerte (indirekte) Wassereinleitung vorgesehen sein, die die dargelegte Wassereinspritzung überlagert. Diese durch Unterdruck im Ansaugkanal bedingte Wasserleitung erfolgt insbesondere dann, wenn sich die Temperatur der Verbrennung beschleunigt der kritischen Temperatur $T_c$ nähert oder trotz direkter Wassereinspritzung die Verbrennungstemperatur einen Wert annimmt, der weniger als 1% unterhalb der kritischen Temperatur liegt. Die indirekte Wassereinleitung kann auch ständig in Betrieb sein, so daß auch in unkritischen Betriebsphasen die Verbrennung nahe an die kritische Temperatur herangeführt werden kann.

Erstaunlicherweise hat sich gezeigt, daß nach dem erfindungsgemäßen Verfahren auch hochexplosives Acetylen ($C_2H_2$) gefahrlos und unter extrem geringem Verbrauch verbrannt werden kann. In diesem Zusammenhang wird zum Stand der Technik auf die FR-A 883,995 verwiesen. Bei einem Versuch mit einem 1200-cm³ Austin-Motor sind folgende Verbrauchswerte festgehalten worden:

| Laufzeit: | 10 Minuten |
|---|---|
| Drehgeschwindigkeit: | 3000 U/min |
| Verbrauch $C_2H_2$: | 0,30 kg |
| Verbrauch $H_2O$: | 3,0 kg. |

Das Verhältnis Wasser: Acetylen betrug bei diesem Versuch also 10:1. Die Schadstoffemission war ebenfalls bei diesem Versuch minimal. Im Verbrennungsraum wurde eine Temperatur von knapp unterhalb der kritischen Temperatur für die Verbrennung von Brennstoff (Acetylen) und Luft gehalten. Bei diesem Versuch war die Förderleistung der Wasser-Einspritzpumpe während der Einspritzphase konstant. Es ist selbstverständlich denkbar, die Förderleistung der Wasser-Einspritzpumpe variabel zu gestalten in Abhängigkeit von der im Verbrennungsraum festgestellten Temperatur. Je näher die Temperatur im Verbrennungsraum sich der kritischen Temperatur nähert, desto größer müßte die Förderleistung der Wasser-Einspritzpumpe sein; oder es setzt die zusätzliche indirekte Wassereinleitung ein.

Ferner ist von nicht untergeordneter Bedeutung die externe Kühlung des Verbrennungsraumes. Zu diesem Zweck ist ein weiterer Temperatursensor (Thermoelement) an dem den Verbrennungsraum umgebenden Wassermantel vorgesehen, der mit der Steuereinheit für die Kühlwasserpumpe gekoppelt ist. Zur genauen Ermittlung der Temperatur der Verbrennung ist vorzugsweise auch im Kolbenboden ein Temperatursensor vorgesehen, der durch eine Keramikschicht vor großer Hitze- und Druckeinwirkung geschützt ist.

Auch ist es denkbar, dem Einund/oder Auslaßventil einen mit der Wasserpumpe koppelbaren Temperatursensor zuzuordnen.

Das erfindungsgemäße Verfahren erlaubt die Durchführung der Verbrennung bei einem "realen" Verdichtungsverhältnis von bis zu 25:1, wobei das "reale" Verdichtungsverhältnis bestimmt ist durch das nur vom Brennstoff und Oxidationsmittel (Luft) eingenommene Volumen. Derartig hohe "reale" Verdichtungsverhältnisse sind bei herkömmlichen Brennkraftmaschinen nicht möglich.

Das dem Brennstoff/Luft-Gemisch beigemengte Wasser kann zum Teil aus den Abgasen zurückgewonnen werden durch an sich bekannte Verdampfungs- und Kondensationsverfahren (siehe z.B. DE-C 31 02 088, US-A 4,279,223 oder NL-A 73 17 549).

Bei Anwendung des erfindungsgemäßen Systems müssen selbstverständlich die übrigen Maschinen-Parameter gegenüber herkömmlichen Maschinen entsprechend angepaßt werden; insbesondere hat sich herausgestellt, daß der Zündzeitpunkt näher an den oberen Totpunkt herangerückt werden muß unter gleichzeitiger früherer Öffnung und wesentlich späterer Schließung des Einlaßventils vor dem oberen Totpunkt bzw. nach dem unteren Totpunkt. Die "Überschneidung" wird also vergrößert, um eine gute Füllung und Spülung des Verbrennungsraumes zu erhalten. Neben den erwähnten Temperatursensoren können noch sogenannte Detonations- bzw. Klopfsensoren und/oder Drucksensoren zur Feststellung des Druckes im Verbrennungsraum zur Steuerung der Druckwasser-Einspritzung und/oder der externen Kühlmittelpumpe vorgesehen sein. Die Verwendung von Klopfsensoren ist jedoch an sich bekannt. Sie hat sich jedoch in der Praxis als zu ungenau und nicht verbrennungsspezifisch herausgestellt. Vor allem ist mittels Klopfsensoren eine Ansteuerung der Initialverbrennung an die Klopfgrenze nicht möglich, da bei Ansprechen der Klopfsensoren in der Regel die Klopfgrenze bereits erreicht bzw. überschritten ist.

Weitere verfahrens- und konstruktionstechnische Details sind in den Unteransprüchen beschrieben.

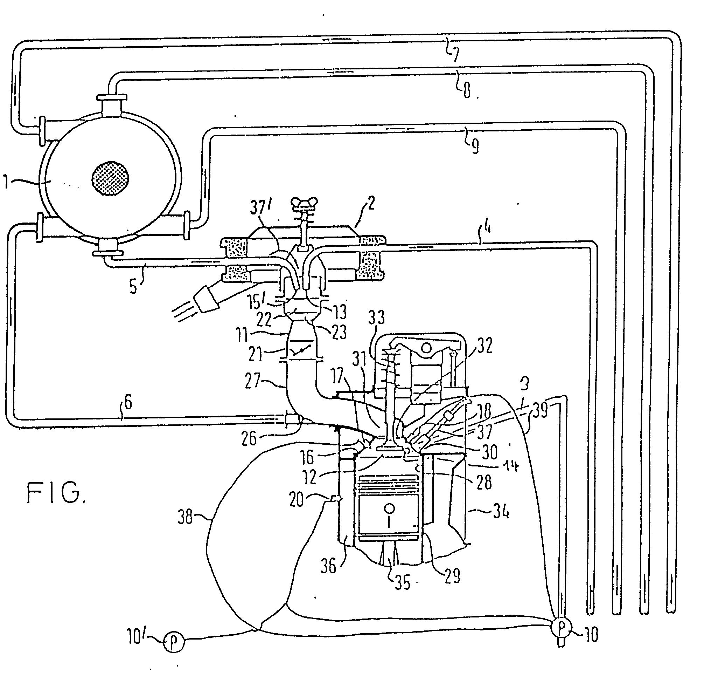

Nachstehend wird die Erfindung anhand eines Ausführungsbeispiels einer Brennkraftmaschine für die Verbrennung von Acetylen und die Verbrennung von Normalbenzin anhand der beigefügten Zeichnung näher erläutert. Diese zeigt einen Hubkolbenmotor samt Ansaugstutzen im schematischen Teilschnitt. Als Brennstoff dient Acetylen. Das Bezugszeichen 30 bezeichnet einen Zylinderkopf mit einer Einlaßleitung 31, einer Einlaßöffnung 32 und einem Einlaßventil 33. An die Einlaßleitung 31 ist ein einen Ansaugkrümmer 27 umfassender Ansaugkanal 11 angeschlossen, dessen freier Querschnitt durch eine Drosselklappe 21 variierbar ist. Das Bezugszeichen 28 bezeichnet den Zylinderraum innerhalb eines Motorblocks 34. Im Zylinderraum 28 ist ein Kolben 29 in herkömmlicher Weise aufund abbewegbar und über eine Pleuelstange 35 mit einer nicht dargestellten Kurbelwelle verbunden. Der Zylinderraum 28 ist von einem Kühlwassermantel 36 umgeben. Die Speisung des Kühlwassermantels 36 erfolgt durch eine Kühlwasserpumpe 10'. Das im Zylinderkopf noch angeordnete Auslaßventil ist nicht sichtbar, da hinter dem Einlaßventil 33 liegend. Zwischen Einlaß- und Auslaßventil ist im Zylinderkopf noch eine Zündkerze 37 angeordnet. Insofern handelt es sich um den herkömmlichen Aufbau eines Viertakt-Verbrennungsmotors.

Die Besonderheit des dargestellten Ausführungsbeispieles eines Verbrennungsmotors liegt zum einen in der Verwendung von Acetylen als Brennstoff und zum anderen in der möglichen Beimengung von Wasser zum Brennstoff/Luft-Gemisch im Ansaugkanal 11 vor der Einleitung in den Verbrennungsraum 12 sowie in der direkten Wassereinspritzung über eine Wassereinspritzdüse 14 und einer dieser zugeordneten Wasserleitung 3. Der Verbrennungsraum 12 wird in herkömmlicher Weise durch die Zylinderkopfwandung einerseits und den Kolbenboden andererseits begrenzt. Vor bzw. stromaufwärts der Drosselklappe 21 ist im Ansaugkanal 11 eine Art Mischkammer 22 ausgebildet, die motorseitig durch eine Einschnürung bzw. einen Venturi-Abschnitt 23 begrenzt ist. In diese Mischkammer 22 münden eine Brennstoffdüse 15' sowie eine Wasserdüse 13. Am oberen bzw. dem Motor abgewandten Ende der Mischkammer 22 ist ein Luftfilter 2 aufgesetzt, durch den hindurch Verbrennungsluft 37' in die Mischkammer 22 strömen kann, und zwar an den Düsen 13 und 15' vorbei. Die zu den Düsen 13 und 15' führenden Wasserleitung 4 bzw. Brennstoffleitung 5 sind bei dem dargestellten Ausführungsbeispiel seitlich durch den Luftfilter 2 hindurchgeführt. Im übrigen handelt es sich um einen handelsüblichen Luftfilter für Verbrennungsmotoren.

In den Ansaugkrümmer 27 mündet noch eine weitere Brennstoffleitung 6 unter Ausbildung eines sich tangential erstreckenden Brennstoffeinlasses 26. Dadurch ist eine zusätzliche direkte Brennstoffzufuhr zur Einlaßleitung 31 möglich. Dies fördert die Initialzündung von Acetylen im Verbrennungsraum 12.

Die Zuruhr von Brennstoff, namlich Acetylen, durch die beiden Brennstoffleitungen 5 und 6 erfolgt über einen Druckregler 1, der über eine Förderleitung 7 gespeist wird. Die Förderleitung 7 ist mit einem Acetylen-Reservoir verbunden. In diesem befindet sich das zu verbrennende Acetylen in flüssigem Zustand. Der Druckregler 1 umfaßt ferner einen Wärmetauscher, der mit dem Kühlmittelkreislauf in Verbindung steht. Über eine Heißwasserzuleitung 8 wird heißes Kühlwasser zum Wärmetauscher gefördert. Im Wärmetauscher wird dann Wärme an das zu verbrennende Acetylen abgegeben. Das dadurch abgekühlte Kühlwasser wird über eine Ableitung 9 wieder dem Kühlsystem zugeführt. Die Erwärmung des zunächst flüssigen Acetylens ist erforderlich, um den bei der Expansion und Verdampfung des Acetylens in der Mischkammer entstehenden Temperaturabfall zu kompensieren und in diesem Bereich eine Vereisung zu vermeiden. Gleiches gilt für den Bereich des Brennstoffeinlasses 26.

Die Wasserleitungen 3 und 4 sind jeweils mit einem nicht dargestellten Wasserreservoir verbunden, wobei die Wasserleitung 3 eine Wasserpumpe 10 umfaßt, mit der Wasser unter Druck direkt in den Verbrennungsraum 12 eingespritzt werden kann. Die Wasserzufuhr über die Wasserleitung 4 und die dieser zugeordnete Wasserdüse 13 erfolgt allein in Abhängigkeit von dem im Ansaugkanal 11 bzw. in der Mischkammer 22 herrschenden Unterdruck, der durch die Drosselklappe 21 steuerbar ist. Die Wasserzufuhr durch die Düse 13 ist bei dem dargestellten Beispiel lastabhängig. Sie kann jedoch auch temperaturgesteuert und/oder abhängig von der Temperaturveränderung gesteuert sein. In diesem Fall ist der Leitung 4 ein Schaltventil (nicht dargestellt) zugeordnet, das in Abhängigkeit von der Temperatur der Primärverbrennung geregelt wird (Öffnen, Schließen, Öffnungsgrad). Die Wasserzufuhr über die Leitung 3 bzw. Wasserdüse 14 in den Verbrennungsraum 12 ist auf jeden Fall temperaturgesteuert derart, daß nach Überschreiten einer vorgegebenen Temperatur im Verbrennungsraum 12 knapp unterhalb der kritischen Temperatur $T_c$ (Klopftemperatur) die Pumpe 10 aktiviert wird. Die Pumpe 10 wird vorzugsweise bei einer Temperatur eingeschaltet, die etwa 1 bis 5% unterhalb der kritischen (Klopf-) Temperatur liegt. Zur Feststellung der Temperatur im Verbrennungsraum 12 sind diesem zwei Thermoelemente 17 und 18 zugeordnet, die über elektrische Leitungen 38, 39 mit der Steuereinheit der Pumpe 10 verbunden sind. Des weiteren ist dem Kühlwassermantel 36 ein Thermoelement 20 zugeordnet, dessen Signale ebenfalls mit der Steuereinheit der Pumpe 10 gekoppelt sein können. Vornehmlich dient das Thermoelement 20 jedoch zur Steuerung der externen Kühlwasserpumpe 10'. In Abhängigkeit von dem Thermoelement 20 wird das Kühlwasser durch die Kühlwasserpumpe 10' mehr oder weniger intensiv umgewälzt. Dadurch soll eine Überhitzung des Motors vermieden werden. Dies ist im vorliegenden Fall wichtig, da eine Primärverbrennung knapp unterhalb der Klopfgrenze angestrebt und angesteuert wird. Die Förderleistung der Pumpe 10 kann variabel sein in Abhängigkeit von der von den Thermoelementen 17 und 18 festgestellten Temperatur im Verbrennungsraum. Vorzugsweise ist das eine Thermoelement 17 nahe der Einlaßöffnung 32 angeordnet, während das zweite Thermoelement 18 sich zwischen Einlaßöffnung 32 und Zündkerze 37 befindet. Durch Vergleich der durch die derart positionierten Thermoelemente festgestellten Temperaturen kann die Temperatur der Primärverbrennung mit großer Genauigkeit ermittelt und über entsprechende Steuerung der Brennstoff- und Wassereinspritzung an die kritische (Klopf-) Temperatur $T_c$ herangeführt werden.

Wie oben ausgeführt worden ist, ist von großer Wichtigkeit für die angestrebte doppelzyklische Verbrennung eine homogene Verteilung von zu zündendem Brennstoff, Wasser und angesaugter Luft im Verbrennungsraum 12. Zu diesem Zweck erfolgt die Einspritzung von Wasser in den Verbrennungsraum 12 durch eine Art Zerstäuberdüse nahe der Zündkerze 27, also am Ort der Entstehung der Primärverbrennung. Die Wasserbeimengung im Ansaugbereich der Maschine erfolgt vorzugsweise entgegengesetzt zur Brennstoffzufuhr sowie der angesaugten Luft. Der Brennstoffaustritt befindet sich in der Mischkammer 22 etwas unterhalb der nach unten gerichteten Wasserdüse 13. Aufgrund dieser Konstellation im Mischbereich 22 des Ansaugkanals 11 ergibt sich eine innige Vermischung von Brennstoff, Luft und Wasser. Zur Erhöhung der Vermischung wird das eingeleitete Wasser beim Austritt "vernebelt". Zu diesem Zweck umfaßt die Wasserdüse 13 jeweils ein Mundstück mit feinen Bohrungen, durch die das Wasser austreten kann. Die Bohrungen sind vorzugsweise in Strömungsrichtung nach unten geneigt. Sie können zusätzlich gegenüber der Radialen geneigt gerichtet sein, so daß den austretenden Wassertröpfchen noch eine Rotationsbewegung um die Längsachsen der Wasserdüse 13 bzw. Mundstücks aufgeprägt werden. Die aufgeprägte Rotationsbewegung der Wassertröpfchen kann gleich- oder entgegengesetzt gerichtet sein.

Es können auch noch Maßnahmen vorgesehen sein, durch die der aus der Brennstoffdüse 15' austretende Brennstoff unter Ausbildung eines Brennstoffkegels aufgefächert wird. Auch dies trägt zu einer Feinverteilung und innigen Vermischung der erwähnten Komponenten bei.

Innerhalb der Mischkammer 22 können auch noch Turbulatoren vorgesehen sein in Form von in den Mischraum 22 ragende Nasen oder Leitbleche. Auf diese Weise verharren die zu vermischenden Komponenten quasi im Mischraum 22, bevor sie diesen durch den Venturi-Abschnitt 23 zur Einlaßleitung 31 verlassen.

Ein erfindungsgemäß getriebender Motor läuft äußerst ruhig bzw. rund, und zwar herab bis zu einer Drehzahl von etwa 200 U/min. Die Schadstoffemission ist minimal. Die Abgastemperatur ist vergleichsweise niedrig. Das Verhältnis von Wasserzu Brennstoffverbrauch beträgt etwa 2 : 1 und mehr. Dies hängt unter anderem auch von den übrigen Konstruktionsdaten des verwendeten Motors ab.

Acetylen-gespeiste Brennkraftmaschinen eignen sich insbesondere für stationäre Zwecke (Notstromaggregate und Klein-Kraftwerke). Acetylen ist gut verfügbar, kann zum. Beispiel aus Calciumcarbid freigesetzt werden. Auch ist die Verwendung von Acetylen als Brennstoff per se seit längerer Zeit bekannt, zum Beispiel bei der sogenannten Carbidlampe. Das Acetylen verbrennt dabei mit Luftsauerstoff zu Kohlenmon- bzw. -dioxid. Heutzutage wird Acetylen in erster Linie zur Polymerisation verwendet, wobei Polyvinylchlorid (PVC) entsteht. Bisher sind jedoch im Stand der Technik keine Vorrichtungen oder Verfahren vorgeschlagen worden, bei denen der große Energiegehalt des Acetylens zum Betreiben einer Brennkraftmaschine verwendet wird, und zwar vor allem zum klopffreien Betreiben einer derartigen Maschine. Im Stand der Technik fehlen konkrete Angaben für das funktionssichere Betreiben einer Brennkraftmaschine, insbesondere eines herkömmlichen Kraftfahrzeugmotors, mit Acetylen. Dabei besitzt Acetylen den Vorteil, daß die Ausgangsstoffe für die Herstellung fast überall ausreichend vorhanden sind, ohne daß man ausschließlich von einem bestimmten begrenzten geographischen oder politischen Gebiet abhängig ist.

So sind die Ausgangsstoffe Kalk, Kohle, Wasser und Salz in reichlichem Maße vorhanden. Der Kalk kann zum Beispiel aus dem Kalkstein in Kalksteinbrüchen oder Kalkgebirgen als ganz wesentlicher Bestandteil der Erdkruste, aus Kreide oder auch aus Meeren und Binnengewässern gewonnen werden. Auch Kohle und Koks ist für den genannten Zweck ausreichend vorhanden. Wasser und Salz stehen ebenfalls praktisch unbegrenzt zur Verfügung. Es bedarf für die Herstellung von Acetylen keiner besonderer Entwicklung mehr, da Acetylen bereits industriell in größeren Mengen für andere Zwecke hergestellt wird, zum Beispiel für Schweiß- und Schneidverfahren, oder wie dargelegt als wichtiger Grundstoff für Kunststoffe oder für künstlichen Kautschuk, und auch für die industrielle Herstellung von Dünge- und Schädlingsbekämpfungsmitteln. Ein weiterer Vorteil besteht darin, daß die Verbrennung von Acetylen unter Anwesenheit von Luft rußfrei erfolgt. Das erfindungsgemäße System stellt sich daher als äußerst umweltfreundlich dar. Überraschend ist, daß trotz der hohen Explosivität von Acetylen erfindungsgemäß die Explosionsgrenze angesteuert wird. Insofern beschreitet die Erfindung einen an sich abwegigen Weg, der sich jedoch aufgrund von Versuchen als äußerst funktionssicher herausgestellt hat und somit gefahrlos ist.

Bei den Untersuchungen hat sich herausgestellt, daß das Verhältnis Wasserverbrauch zu Acetylenverbrauch zwischen etwa 2:1 und bis zu 7:1 liegt. Der Wirkungsgrad des Motors konnte um bis zu 70% gesteigert werden. Die Schadstofemission war minimal. Die Abgase enthielten nur noch verschwindende Mengen C0. Das gleiche gilt für Stickoxide $NO_x$.

Ferner zeigte sich, daß der Verlauf der Betriebskurven (Leistung, Drehmoment und Verbrauch) demjenigen herkömmlicher Verbrennungsmotoren entsprach.

Untersuchungen mit Benzinspeisung haben gezeigt, daß im Schnitt das Verhältnis von Wasser zu Benzin (Normalbenzin) zu Luft wie folgt ist: 0,5: 1:20.

Das in den Verbrennungsraum und/oder Ansaugkanal eingeleitete Wasser besitzt Raumtemperatur; vorzugsweise wird es jedoch vorgewärmt auf etwa 65°C. Dies kann durch einen Wärmeaustausch mit dem Kühlwassersystem erfolgen oder durch Beimengung von aus dem Abgas rückgewonnenes Wasser.

Erfindungsgemäß wird also im Gegensatz zu den bis heute universell realisierten Prinzipien Schutz begehrt für den Gedanken der Durchführung eines "IM INNERN DER BRENNKAMMER EINES ENDOTHERMEN MOTORS ERZEUGTEN DAMPF-ZYKLUS".

Ein thermodynamischer Zyklus, in dem DIE QUANTITAT DES VORHANDENEN (erzeugten) DAMPFES, die als Sekundärfluid bezeichnet wird, eine Masse besitzt, die vergleichbar ist mit derjenigen der Verbrennungsluft, die zur Verbrennung der aktiven Ladung notwendig ist, welche als Primärfluid bezeichnet wird.

Ein thermodynamischer Zyklus, in welchem tatsächlich in ein und demselben Reaktionszeitpunkt ZWEI AKTIVE FLUIDE vorhanden sind: DAMPF (der durch die Verdampfung des zusätzlichen Wassers erzeugt wird) sowie VERBRENNUNGSGASE (die durch die Verbrennung des Primärfluids erzeugt werden) und dies in prozentualen Anteilen der gleichen Größenordnung.

Die bis heute bekannten Einspritzsysteme und -techniken spritzen Wassermassen in sehr kleinen Mengen ein (einige Prozent der Masse der Luft) und liefern Wirkungsgrade, die leicht über den herkömmlichen liegen. Diese Werte des Wirkungsgrads sind nicht auf irgendeine Weise direkt an die Prozentmenge des eingespritzten Wassers gebunden.

Der hier vorgeschlagene thermodynamische Zyklus ist IN KLAREM GEGENSATZ zum bisher bekannten nur durchführbar, wenn in der Brennkammer des endothermen Motors BESONDERE THERMOPHYSIKALISCHE BEDINGUNGEN der Temperatur, des Drucks und des Volumens der eingespritzten (oberhalb des Ansaugventils oder der Drosselklappe des Vergasers zubereiteten) und komprimierten Ladung geschaffen werden, so daß eine kontrollierte Explosion erreicht und erzeugt wird, in der die Massendosen des eingespritzten Wasers die Reaktion im Gleichgewicht halten, wobei der eigene Entalpiegehalt durch das Ausnutzen der (in dem gewollten Explosionsbetrieb freigesetzten) Energie stark anwächst, die andernfalls NICHT NUTZBAR ist (bzw. unwiederbringlich verloren wäre, wenn kein Austausch mit dem in die Ladung eingespritzten und homogenisierten Wasser stattfände).

Daraus folgt, daß die Wasserdosen UM SO GRÖSSER SIND, JE GRÖSSER, HEFTIGER UND AUFLODERNDER die Explosion des Luft-Kraftstoffgemisches ist. Das Endergebnis besteht darin, daß außer Produkten des Arbeitstakts des Motors (Primärfluid des Motors) ungeheure Mengen von superübererhitztem Dampf mit sehr hohem Energiegehalt vorhanden sind.

Die Rolle des eingespritzten Wassers ist also nicht die bis heute bekannte, nämlich die Vermeidung von Temperaturspitzen aufgrund anormaler Verbrennungen. Vielmehr und im Gegensatz zu allen bekannten und bis heute akzeptierten Regeln des Motorbaus BESTEHT DIE AUFGABE DES IN DER LADUNG EMULGIERTEN WASSERS DARIN, AN DER (IN GEEIGNETER WEISE GEZÜNDETEN) EXPLOSIVEN REAKTION TEILZUNEHMEN, indem es sehr große Mengen von (anders nicht nutzbarer) Energie aufnimmt, wobei es seinen Entalpiegehalt vergrößert und während der Expansion sukzessiv abgibt.

Bei einer Turbinenanlage z.B. ist es nach dem vorhin Gesagten möglich, durch Verbrennungen im Innern des Brenners thermodynamische Zyklen mit außerordentlich hohem Wirkungsgrad zu erzeugen derart, daß man erhebliche Mengen an überhitztem Dampf erhält, die vergleichbar sind mit denen der als Sauerstoffträger dienenden Luft, wobei dieser Dampf anschließend in der Turbine expandiert. Wenn man in der beschriebenen Weise verfährt, erhält man Werte des globalen Wirkungsgrades, die entschieden größer sind als bei herkömmlichen Gasturbinenanlagen.

Über die Verbrennung der Gase hinaus kann man also Dampf mit sehr hohem Entalpiegehalt erzeugen, wobei man die Verluste in den verschiedenen herkömmlichen Geräten (Erhitzer, Brenner, Überhitzer, Wärmetauscher, Kondensatoren usw.), die für die Energieerzeugungsanlagen typisch und notwendig sind, drastisch verringert.

**Patentansprüche**

1. Verfahren zum Betreiben einer Brennkraftmaschine, insbesondere eines Hub- oder Drehkolbenmotors. bei dem flüssiger oder gasförmiger Brennstoff bei Anwesenheit von Luft oder einem anderen Oxidationsmittel und unter Zugabe von Wasser in einem Verbrennungsraum verbrannt wird, wobei die Zugabe von Wasser in Abhängigkeit von der Verbrennungstemperatur gesteuert wird, derart, daß sie immer dann einsetzt, wenn die Verbrennungstemperatur auf einen Wert unterhalb der kritischen Klopf-Temperatur (Klopfgrenze) angestiegen ist, und derart, daß das Wasser während mindestens einer ausgewählten Phase in einer solchen Menge daß sich eine fortschreitende fein zerstäubt unmittelbar in den Verbrennungsraum eingeleitet bzw. eingespritzt wird Verbrennung unterhalb der kritischen Klopf-Temperatur ergibt, dadurch gekennzeichnet, daß die Verbrennungstemperatur mit mindestens einem Thermoelement ermittelt wird, welches in den Verbrennungsraum ragt oder in einer den Verbrennungsraum begrenzenden Wandung zum Verbrennungsraum hin gerichtet angeordnet ist, und daß die so ermittelte Verbrennungstemperatur einer Steuereinheit zugeführt wird, die eine zur Wasserabgabe dienende Pumpe in Abhängigkeit von dieser Temperatur immer dann einschaltet, wenn sie auf einen vorbestimmten Wert ansteigt, der 1 bis 5% niedriger ist als die kritische Klopf-Temperatur, und die Wasserabgabe wieder unterbricht, wenn die Temperatur unter den vorbestimmten Temperaturwert absinkt.

2. Verfahren nach Anspruch 1, dadurch gekennzeichnet, daß die Verbrennung unter Verwendung von NiedrigoktanBrennstoff wie Normalbenzin oder dergleichen durchgeführt wird.

3. Verfahren nach einem der Ansprüche 1 oder 2, dadurch gekennzeichnet, daß die Verbrennung unter Verwendung von Acetylen (C₂H₂) als Brennstoff durchgeführt wird.

4. Verfahren nach einem oder mehreren der Ansprüche 1 bis 3, dadurch gekennzeichnet, daß Wasser zusätzlich durch den im Ansaugbereich der Brennkraftmaschine lastabhängig wirkenden Unterdruck in diesen angesaugt und/oder abhängig von der im Verbrennungsraum herrschenden Temperatur (Verbrennungstemperatur) unter Druck eingespritzt wird.

5. Verfahren nach Anspruch 4, dadurch gekennzeichnet, daß zusätzliches Wasser in den Ansaugbereich der Brennkraftmaschine eingeleitet wird, wenn sich die Verbrennungstemperatur überproportional schnell der kritischen Klopf-Temperatur nähert oder einen Wert annimmt, der weniger als 1% unterhalb der kritischen Klopf-Temperatur liegt.

6. Verfahren nach einem der vorhergehenden Ansprüche, insbesondere Anspruch 4, dadurch gekennzeichnet, daß bei Verwendung eines gasförmigen Brennstoffes, insbesondere Acetylen, dieser vor Einleitung in den Verbrennungsraum vorgewärmt wird.

7. Verfahren nach einem oder mehreren der Ansprüche 4 bis 6, dadurch gekennzeichnet, daß bei zusätzlicher Wasserbeimischung im Ansaugbereich zur intensiven Vermischung von Brennstoff/Luft/Wasser diese drei Komponenten bei der Einleitung in einen weitgehend geschlossenen Mischbereich in diesem stark verwirbelt werden.

8. Verfahren nach einem der vorhergehenden Ansprüche, dadurch gekennzeichnet, daß die Verbrennung bei einem Verdichtungsverhältnis, bestimmt durch das nur vom Brennstoff und Oxidationsmittel eingenommene Volumen, von bis zu 35: 1 durchgeführt wird.

9. Verfahren nach einem der vorhergehenden Ansprüche, dadurch gekennzeichnet, daß das dem Brennstoff/Luft-Gemisch beigemengte Wasser wenigstens zum Teil aus den Abgasen kondensiertes Wasser ist.

10. Verfahren nach einem der Ansprüche 4 bis 9, dadurch gekennzeichnet, daß bei Anwendung einer Fremdzündung der Zündzeitpunkt näher zum oberen Totpunkt hin verschoben wird unter gleichzeitig früherer Öffnung und wesentlich späterer Schließung des Einlaßventils vor dem oberen Totpunkt bzw. nach dem unteren Totpunkt als bei einer herkömmlichen Brennkraftmaschine.

11. Brennkraftmaschine, insbesondere Huboder Drehkolbenmotor, die mit einem flüssigen oder gasförmigen Brennstoff bei Anwesenheit von Luft oder einem anderen Oxidationsmittel und unter Zugabe von Wasser betrieben wird mit einem Verbrennungsraum (12), einer Dosiereinrichtung zur dosierten Zugabe von Wasser, welche eine Wasser-Förderpumpe (Pumpe 10) und eine Wasserleitung (3, 4) umfaßt, deren in den Maschinenbereich weisende Mündung einen Zerstäuber (14) aufweist, einem zum Verbrennungsraum führenden Ansaugkanal (11) zur Ansaugung der Luft oder einem anderen Oxidationsmittel, einer Brennstoffleitung (5) und mit einer Steuereinheit, die mit mindestens einem im Bereich des Verbrennungsraums (12) angeordneten Temperaturfühler (17, 18) gekoppelt ist und die die Wasser-Förderpumpe (10) in Abhängigkeit von der mit dem Temperaturfühler (17, 18) ermittelten Verbrennungstemperatur steuert, dadurch gekennzeichnet, daß die Wasserleitung (3) in den Verbrennungsraum (12) mundet, daß der Temperaturfühler (17, 18) als Thermoelement ausgebildet ist, das in den Verbrennungsraum (12) ragt oder in einer den Verbrennungsraum (12) begrenzenden Wandung zum Verbrennungsraum (12) hin gerichtet angeordnet ist, und daß die Steuereinheit die Wasser-Förderpumpe dann einschaltet, wenn die ermittelte Verbrennungstemperatur auf einen vorbestimmten Wert ansteigt, der 1 bis 5% niedriger ist als die kritische Klopf-Temperatur (Klopfgrenze), und die Wasserabgabe wieder unterbricht, wenn die Temperatur unter den vorbestimmten Temperaturwert absinkt.

12. Brennkraftmaschine nach Anspruch 11, dadurch gekennzeichnet, daß zusätzlich zur gesteuerten Wassereinleitung mittels der Pumpe (10) eine vom Unterdruck im Ansaugkanal (11) abhängige Wassereinleitung über eine in den Ansaugkanal mündende Düse (13) vorgesehen ist.

13. Brennkraftmaschine nach Anspruch 11 oder 12, dadurch gekennzeichnet, daß die Pumpe (10) bzw. deren Steuereinheit mit einem weiteren Thermoelement (Temperatursensor 20), mittels dem die Temperatur des externen Kühlwassers in unmittelbarer Nähe des Verbrennungsraumes (12) feststellbar ist, und gegebenenfalls einem noch weiteren, dem Boden des Kolbens (29) zugeordneten Thermoelement (Temperatursensor) gekoppelt ist und durch das bzw. die zusammen mit den dem Verbrennungsraum (12) unmittelbar zugeordneten Thermoelementen (17, 18) die Pumpe (10) unter Errechnung der tatsächlichen Verbrennungstemperatur steuerbar ist.

14. Brennkraftmaschine nach einem der Ansprüche 11 bis 13, dadurch gekennzeichnet, daß im Ansaugkanal (11) vor bzw. stromaufwärts der dort üblicherweise vorgesehenen Drosselklappe (21) eine weitgehend geschlossene Mischkammer (22) zur intensiven Vermischung von Brennstoff, Luft und Wasser angeordnet ist, in die im Gegenstrom zueinander Luft und Wasser sowie gegebenenfalls Brennstoff einleitbar sind.

15. Brennkraftmaschine nach Anspruch 14, dadurch gekennzeichnet, daß die Mischkammer (22) zwischen einem Luftfilter (2) und einem der Drosselklappe (21) vorgeordneten Venturi-Abschnitt (23) des Ansaugkanals (11) liegt.

16. Brennkraftmaschine nach einem der Ansprüche 14 oder 15, dadurch gekennzeichnet, daß die in die Mischkammer (22) mündende Wasserdüse (13) ein eine Vielzahl von feinen Bohrungen aufweisendes Mundstück umfaßt.

17. Brennkraftmaschine nach Anspruch 16, dadurch gekennzeichnet, daß die Bohrungen im Mundstück in Strömungsrichtung und/oder zur jeweiligen Radialen des Mundstücks geneigt gerichtet sind.

18. Brennkraftmaschine nach einem der Ansprüche 14 bis 17, dadurch gekennzeichnet, daß der in die Mischkammer (22) mündenden Wasserleitung (4) ein Schaltventil zugeordnet ist, das in Abhängigkeit von der Temperaturveränderung im Verbrennungsraum steuer-, d.h. öffen- und schließbar, ist.

19. Brennkraftmaschine nach einem der Ansprüche 11 bis 18, dadurch gekennzeichnet, daß bei Verwendung von brennbarem Gas, insbesondere Acetylen, als Brennstoff, mindestens ein weiterer Brennstoffeinlaß (26) stromabwärts der Drosselklappe (21) in den Ansaugkanal (11) mündet.

20. Brennkraftmaschine nach Anspruch 19, dadurch gekennzeichnet, daß dem Brennstoffeinlaß (15', 26) ein Wärmetauscher und/oder Gasdruckregler (1) vorgeschaltet ist bzw. sind.

21. Brennkraftmaschine nach einem der Ansprüche 18 bis 20, dadurch gekennzeichnet, daß die Pumpe (10) und/oder das der Wasserleitung (4) zugeordnete Schaltventil zusätzlich durch einen Klopfoder Detonationssensor steuerbar ist.

22. Brennkraftmaschine nach einem der Ansprüche 11 bis 21, dadurch gekennzeichnet, daß die Pumpe (10) zusätzlich durch ein die Temperatur der Abgase feststellendes Thermoelement (Temperatursensor) steuerbar ist.

23. Brennkraftmaschine nach einem der Ansprüche 11 bis 22, dadurch gekennzeichnet, daß dem Verbrennungsraum (12) ein Drucksensor zugeordnet ist, durch den die pumpe (10) aktivierbar ist, derart, daß bei Überschreiten eines vorgegebenen Druckes knapp unterhalb des kritischen Klopf-Druckes im Verbrennungsraum (12) die Pumpe (10) einschaltbar ist.

**Revendications**

1. Procédé pour faire fonctionner un moteur à combustion interne, en particulier un moteur à pistons alternatifs ou rotatifs, dans lequel un carburant liquide ou gazeux est brûlé dans une chambre de combustion en présence d'air ou d'un autre oxydant et avec addition d'eau, l'addition d'eau étant commandée en fonction de la température de combustion de telle sorte qu'elle commence à chaque fois que la température de combustion s'est élevée à une valeur située au-dessous de la température critique de détonation (limite de résistance à la détonation) et de telle sorte que l'eau est introduite ou injectée, finement pulvérisée, directement dans la chambre de combustion, pendant au moins une phase choisie, en une quantité suffisante pour poursuivre la combustion au-dessous de la température critique de détonation, caractérisé en ce que la température de combustion est déterminée à l'aide d'au moins un thermocouple qui fait saillie dans la chambre de combustion ou est disposé dans une paroi limitant la chambre de combustion et dirigé vers la chambre de combustion, et que la température de combustion ainsi déterminée est amenée à une unité de commande qui met en circuit une pompe servant à la délivrance de l'eau en fonction de cette température à chaque fois qu'elle s'élève à une valeur prédéterminée, inférieure de 1 à 5% à la température critique de détonation, et interrompt de nouveau la délivrance de l'eau quand la température tombe au-dessous de la valeur prédéterminée.

2. Procédé selon la revendication 1, caractérisé en ce que la combustion est conduite en utilisant un carburant à faible indice d'octane tel que l'essence ordinaire ou analogue.

3. Procédé selon l'une des revendications 1 et 2, caractérisé en ce que la combustion est conduite en utilisant de l'acétylène ($C_2H_2$) comme carburant.

4. Procédé selon l'une des revendication 1 à 3, caractérisé en ce que de l'eau est additionnellement aspirée dans la région d'aspiration du moteur à combustion interne par la dépression qui s'y exerce en fonction de la charge et/ou injectée sous pression en fonction de la température régnant dans la chambre de combustion (température de combustion).

5. Procédé selon la revendication 4, caractérisé en ce que de l'eau supplémentaire est introduite dans la zone d'aspiration du moteur à combustion interne quand la température de combustion s'approche de la température critique de détonation à une vitesse surproportionnelle ou prend une valeur inférieure de moins de 1% à la température critique de détonation,.

6. Procédé selon l'une des revendications précédentes, en particulier la revendication 4, caractérisé en ce que, lorsqu'on utilise un carburant gazeux, en particulier l'acétylène, celui-ci est préchauffé avant introduction dans la chambre de combustion.

7. Procédé selon une ou plusieurs des revendications 4 à 6, caractérisé en ce que, dans le cas d'une addition d'eau supplémentaire dans la zone d'aspiration, pour le mélange intense carburant/air/eau, ces trois composants sont fortement tourbillonnés lors de leur introduction dans une zone de mélange dans une large mesure fermée.

8. Procédé selon l'une des revendications précédentes, caractérisé en ce que la combustion a lieu à un taux de compression, déterminé en tenant compte seulement des volumes de carburant et d'oxydant, allant jusqu'à 35:1.

9. Procédé selon l'une des revendications précédentes caractérisé en ce que l'eau ajoutée au mélange carburant/air est au moins en partie de l'eau condensée à partir des gaz d'échappement.

10. Procédé selon l'une des revendications 4 à 9, caractérisé en ce que, en cas d'utilisation d'un allumage commandé, l'instant d'allumage est décalé pour se rapprocher du point mort supérieur, avec en même temps une ouverture avancée et une fermeture sensiblement retardée de la soupape d'admission respectivement avant le point mort supérieur et après le point mort inférieur, par rapport à un moteur à combustion interne usuel.

11. Moteur à combustion interne, en particulier moteur à pistons alternatifs ou rotatifs, fonctionnant avec un carburant liquide ou gazeux en présence d'air ou d'un autre oxydant et avec addition d'eau, comprenant une chambre de combustion (12), un dispositif de dosage pour une addition dosée d'eau, qui comporte une pompe d'alimentation en eau (pompe 10) et une conduite d'eau (3, 4), dont l'ouverture tournée dans la zone du moteur comporte un pulvérisateur (14), un canal d'aspiration (11) conduisant à la chambre de combustion pour l'aspiration de l'air ou d'un autre oxydant, une conduite de carburant 5, et comprenant une unité de commande couplée à au moins un capteur de température (17, 18) disposé dans la région de la chambre de combustion (12) et qui commande la pompe d'alimentation en eau (10) en fonction de la température de combustion déterminée à l'aide du capteur de température (17, 18), caractérisé en ce que la conduite d'eau (3) débouche dans la chambre de combustion (12), que le capteur de température (17, 18) est sous forme d'un thermocouple qui fait saillie dans la chambre de combustion (12) ou est disposé dans une paroi limitant la chambre de combustion (12) et orienté vers la chambre de combustion (12), et que l'unité de commande met en circuit la pompe d'alimentation en eau quand la température de combustion détectée atteint une valeur prédéterminée inférieure de 1 à 5% à la température critique de détonation (limite de résistance à la détonation), et interrompt de nouveau la délivrance d'eau quand la température tombe au-dessous de la valeur prédéterminée.

12. Moteur selon la revendication 11, caractérisé en ce qu'en supplément de l'introduction d'eau commandée au moyen de la pompe (10) est prévue une introduction d'eau dépendant de la dépression dans le canal d'aspiration (11) à travers un injecteur (13) débouchant dans le canal d'aspiration.

13. Moteur selon l'une des revendications 11 et 12, caractérisé en ce que la pompe (10) ou son unité de commande est couplée à un thermocouple supplémentaire (capteur de température 20), au moyen duquel peut être déterminée la température de l'eau de refroidissement externe au voisinage immédiat de la chambre de combustion (12), et le cas échéant à encore un autre thermocouple (capteur de température) associé au fond du piston (29), et que la pompe peut être commandée par celui-ci ou ceux-ci conjointement aux thermocouples (17, 18), associés directement à la chambre de combustion (12), avec calcul de la température de combustion réelle.

14. Moteur selon l'une des revendications 11 à 13, caractérisé en ce qu'une chambre de mélange (22) dans une large mesure fermée pour le mélange intensif du carburant, de l'air et de l'eau est disposée dans le canal d'aspiration (11) avant ou en amont du papillon des gaz (21) qui y est habituellement prévu, dans laquelle peuvent être introduits à contre-courant l'un de l'autre de l'air et de l'eau et le cas échéant du carburant.

15. Moteur selon la revendication 14, caractérisé en ce que la chambre de mélange (22) est située entre un filtre à air (2) et une section Venturi (23) du canal d'aspiration (11) précédant le papillon (22).

16. Moteur selon l'une des revendications 14 et 15, caractérisé en ce que l'injecteur d'eau (13) débouchant dans la chambre de mélange (22) comprend un ajutage muni d'une multiplicité de fines perforations.

17. Moteur selon la revendication 16, caractérisé en ce que les perforations de l'ajutage sont orientées dans la direction de l'écoulement et/ou inclinées par rapport aux radiales correspondantes de l'ajutage.

18. Moteur selon l'une des revendications 14 à 17, caractérisé en ce qu'une soupape d'arrêt est associée à la conduite d'eau (4) débouchant dans la chambre de mélange (22), qui peut être commandée en ouverture et en fermeture en fonction de la variation de température dans la chambre de combustion.

19. Moteur selon l'une des revendications 11 à 18, caractérisé en ce que, en cas d'utilisation d'un gaz combustible, en particulier l'acétylène, comme carburant, au moins une entrée supplémentaire de carburant (26) débouche dans le canal d'aspiration (11) en aval du papillon (21).

20. Moteur selon la revendication 19, caractérisé en ce qu'un échangeur de chaleur et/ou un régulateur de pression de gaz (11) précède(nt) l'entrée de carburant (15', 26).

21. Moteur selon l'une des revendications 18 à 20, caractérisé en ce que la pompe (10) et/ou la soupape d'arrêt associée à la conduite d'eau (4) peut en plus être commandée par un détecteur de détonation ou de cognement.

22. Moteur selon l'une des revendications 11 à 21, caractérisé en ce que la pompe (10) peut en outre être commandée par un thermocouple (capteur de température) déterminant la température des gaz d'échappement.

23. Moteur selon l'une des revendications 11 à 22, caractérisé en ce qu'un capteur de pression est associé à la chambre de combustion (12), par lequel la pompe (10) peut être activée, et que lors d'un dépassement d'une pression prédéterminée immédiatement inférieure à la pression critique de détonation dans la chambre de combustion (12) la pompe (10) peut être mise en circuit.

**Claims**

1. Method for operating an internal combustion engine, in particular a reciprocating or rotary engine, in which liquid or gaseous fuel is burnt in a combustion chamber in the presence of air or some other oxidizing agent and with the addition of water, the addition of water being controlled as a function of the combustion temperature, such that it starts whenever the combustion temperature has risen to a value below the critical knocking temperature (knock limit), and such that, during at least one selected phase, the water is introduced or injected in finely atomized form directly into the combustion chamber, in an amount such that a progressive combustion below the critical knocking temperature is obtained, characterized in that the combustion temperature is ascertained using at least one thermocouple, which protrudes into the combustion chamber or is arranged oriented towards the combustion chamber in a wall limiting the combustion chamber, and in that the combustion temperature ascertained in this way is fed to a control unit which switches on a pump serving for the delivery of water as a function of this temperature whenever it rises to a predetermined value, which is 1 to 5% lower than the critical knocking temperature, and interrupts the delivery of water again when the temperature falls below the predetermined temperature value.

2. Method according to Claim 1, characterized in that combustion is performed using low-octane fuel, such as regular-grade petrol or the like.

3. Method according to either of Claims 1 or 2, characterized in that combustion is performed using acetylene ($C_2H_2$) as fuel.

4. Method according to one or more of Claims 1 to 3, characterized in that water is in addition sucked into the intake region of the internal combustion engine by the vacuum acting load-dependently in said region and/or is injected under pressure as a function of the temperature prevailing in the combustion chamber (combustion temperature).

5. Method according to Claim 4, characterized in that additional water is introduced into the intake region of the internal combustion engine if the combustion temperature approaches the critical knocking temperature with disproportionate rapidity or assumes a value which is less than 1% below the critical knocking temperature.

6. Method according to one of the preceding Claims, in particular Claim 4, characterized in that, when a gaseous fuel, in particular acetylene, is used, it is preheated before it is introduced into the combustion chamber.

7. Method according to one or more of Claims 4 to 6, characterized in that, in the case of the additional admixture of water in the intake region, the three components fuel/air/water are vigorously swirled in a substantially closed mixing region upon introduction into the latter, for the purpose of the intensive mixing of said three components.

8. Method according to one of the preceding Claims, characterized in that combustion is performed at a compression ratio, determined by the volume taken up only by the fuel and oxidizing agent, of up to 35:1.

9. Method according to one of the preceding Claims, characterized in that the water added to the fuel/air mixture is at least in part water condensed from the exhaust gases.

10. Method according to one of Claims 4 to 9, characterized in that, if a spark ignition is used, the ignition point is shifted nearer to top dead centre with simultaneously earlier opening and substantially later closing of the inlet valve before top dead centre and after bottom dead centre respectively than in a conventional internal combustion engine.

11. Internal combustion engine, in particular reciprocating or rotary engine, which is operated using a liquid or gaseous fuel in the presence of air or some other oxidizing agent and with the addition of water, having a combustion chamber (12), a metering device for the metered addition of water, which device comprises a water feed pump (pump 10) and a water pipe (3, 4), the mouth of which, said mouth pointing into the region of the engine, has an atomizer (14), having an intake duct (11), which leads to the combustion chamber, for sucking in the air or some other oxidizing agent, having a fuel pipe (5) and having a control unit, which is coupled to at least one temperature detector (17, 18) arranged in the region of the combustion chamber (12) and which controls the water feed pump (10) as a function of the combustion temperature ascertained using the temperature detector (17, 18), characterized in that the water pipe (3) opens into the combustion chamber (12), in that the temperature detector (17, 18) is designed as a thermocouple which protrudes into the combustion chamber (12) or is arranged oriented towards the combustion chamber (12) in a wall limiting the combustion chamber (12), and in that the control unit switches on the water feed pump when the ascertained combustion temperature rises to a predetermined value which is 1 to 5% lower than the critical knocking temperature (knock limit) and interrupts the water delivery again if the temperature falls below the predetermined temperature value.

12. Internal combustion engine according to Claim 11, characterized in that, in addition to the controlled introduction of water by means of the pump (10), introduction of water as a function of the vacuum in the intake duct (11) is provided via a nozzle (13) opening into the intake duct.

13. Internal combustion engine according to Claim 11 or 12, characterized in that the pump (10) or the control unit of the latter is coupled to a further thermocouple (temperature sensor 20), by means of which the temperature of the external cooling water in the immediate vicinity of the combustion chamber (12) can be determined, and, if required, to yet another thermocouple (temperature sensor) assigned to the base of the piston (29), by which thermocouple(s), together with the thermocouples (17, 18) assigned directly to the combustion chamber (12), the pump (10) can be controlled by calculation of the actual combustion temperature.

14. Internal combustion engine according to one of Claims 11 to 13, characterized in that arranged in the intake duct (11) before or upstream of the throttle valve (21) generally provided there is a substantially closed mixing chamber (22) for the intensive mixing of fuel, air and water, into which air and water and, if required, fuel can be introduced in opposite directions of flow to one another.

15. Internal combustion engine according to Claim 14, characterized in that the mixing chamber (22) is situated between an air filter (2) and a venturi section (23) of the intake duct (11), said venturi section being arranged before the throttle valve (21).

16. Internal combustion engine according to either of Claims 14 or 15, characterized in that the water nozzle (13) opening into the mixing chamber (22) comprises a mouthpiece having a multiplicity of fine holes.

17. Internal combustion engine according to Claim 16, characterized in that the holes in the mouthpiece are oriented in the direction of flow and/or obliquely to the respective radial of the mouthpiece.

18. Internal combustion engine according to one of Claims 14 to 17, characterized in that assigned to the water pipe (4) opening into the mixing chamber (22) is an on-off valve, which is controllable as a function of the temperature alteration in the combustion chamber, i.e. can be opened and closed.

19. Internal combustion engine according to one of Claims 11 to 18, characterized in that, if combustible gas, in particular acetylene, is used as fuel, at least one further fuel inlet (26) opens into the intake duct (11) downstream of the throttle valve (21).

20. Internal combustion engine according to Claim 19, characterized in that a heat exchanger and/or gas pressure governor (1) is/are placed upstream of the fuel inlet (15', 26).

21. Internal combustion engine according to one of Claims 18 to 20, characterized in that the pump (10) and/or the on-off valve assigned to the water pipe (4) is additionally controllable by a knock or detonation sensor.

22. Internal combustion engine according to one of Claims 11 to 21, characterized in that the pump (10) is additionally controllable by a thermocouple (temperature sensor) detecting the temperature of the exhaust gases.

23. Internal combustion engine according to one of Claims 11 to 22, characterized in that assigned to the combustion chamber (12) is a pressure sensor by which the pump (10) can be activated, such that when a predetermined pressure just below the critical knocking pressure in the combustion chamber (12) is exceeded the pump (10) can be switched on.

FIG.